(19) Europäisches Patentamt
European Patent Office
Office européen des brevets

(11) Publication number: **0 199 020 B1**

(12) **EUROPEAN PATENT SPECIFICATION**

(45) Date of publication of patent specification: **23.10.91**

(51) Int. Cl.[5]: **A47J 36/02**, C08G 63/60, C08G 63/68, B32B 27/08

(21) Application number: **86102488.3**

(22) Date of filing: **26.02.86**

(54) **Plastic ovenware having non-tackinessand and process for preparation thereof.**

(30) Priority: **01.03.85 JP 41635/85**

(43) Date of publication of application: **29.10.86 Bulletin 86/44**

(45) Publication of the grant of the patent: **23.10.91 Bulletin 91/43**

(84) Designated Contracting States: **BE DE FR GB IT NL**

(56) References cited:
**EP-A- 0 022 256**
**FR-A- 2 224 532**
**FR-A- 2 464 683**
**FR-A- 2 537 149**

**WPI, FILE SUPPLIER, AN=80-56024C, Derwent Publications Ltd, London, GB; & JP-A-55 084 321 (SUMITOMO CHEMICAL K.K.) 26-06-1980**

(73) Proprietor: **SUMITOMO CHEMICAL COMPANY, LIMITED**
**Kitahama 4-chome 5-33**
**Chuo-ku Osaka 541(JP)**

(72) Inventor: **Saito, Teruo**
**637-52, Nomuracho**
**Kusatsu-shi(JP)**
Inventor: **Asai, Kuniaki**
**8-8, Tanigawacho**
**Tondabayashi-shi(JP)**
Inventor: **Kobayashi, Tadayasu**
**2-1, Kuwatacho**
**Ibaraki-shi(JP)**

(74) Representative: **Henkel, Feiler, Hänzel & Partner**
**Möhlstrasse 37**
**W-8000 München 80(DE)**

EP 0 199 020 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

FIELD OF THE INVENTION

This invention relates to plastic ovenware and a process for preparing said ovenware

DESCRIPTION OF THE PRIOR ART

Ovenware, namely, cooking vessels used in electric ovens and subjected to a combination of microwave irradiation and electric heating therein are required to have an excellent heat resistance, mechanical strength, electrical characteristics, resistance to staining by foods and attractive appearance. The heat resistance, in particular, needs to be very high because not only high frequency but also electric heating are applied. For instance, ovenware must suffer no deformation even at 200° to 250°C and have good mechanical strength characteristics.

Wholly aromatic polyesters have excellent properties due to their molecular structure and are outstanding among resins particularly due to their heat resistance. Of the wholly aromatic polyesters, those produced from terephthalic acid, isophthalic acid, p-hydroxybenzoic acid, or its derivatives, and 4,4'-dihydroxydiphenyl or its derivatives are injection-moldable and have an excellent heat resistance, resistance to chemicals, radiation resistance, insulation, etc. and accordingly are extensively used in many fields, including electricity and electronics.

Furthermore, although wholly aromatic polyesters, have a high dielectric loss tangent of 0.004 to 0.02 similar to conventional polyesters, they have a high crystallinity and a very high heat distortion temperature of 293°C. Therefore, even when microwaves have been applied to them, they stay below the heat distortion temperature and do not deform easily.

Furtheremore, the wholly aromatic polyesters have improved heat resistance, improved rigidity and decreased mold shrinkage when they are blended with a fibrous reinforcing material such as glass fibers, or carbon fibers or with an inorganic filler material in powder, needle or flake form such as calcium carbonate, magnesium carbonate, aluminum hydroxide, glass beads, titanium dioxide, mica, clay, silica powder, talc, molybdenum disulfide, graphite, wollastonite and potassium titanate fibers.

However, wholly aromatic polyesters have various drawbacks. In injection molding, they have a high molding temperature; a small molding temperature difference greatly changes the melt viscosity; and they are orientated severely. Moreover, they solidify very quickly in a mold. Therefore, the molded article has a high anisotropy, has non-uniform flow marks, has poor surface smoothness and does not look attractive. When a food containing an edible oil, vinegar and a sauce is placed in this molded article and in this state the molded article is subjected to repeated use as ovenware, staining of the inner surface becomes increasingly pronounced, an unpleasant odor stays inside and the non-stick nature of the inner surface deteriorates making it difficult to remove food.

However, as disclosed in Japanese Patent Application Kokai (Laid-open) No. 36154/1984, the molded article of wholly aromatic polyester can be remarkably improved as regards anisotropy and appearance by incorporating talc and titanium dioxide with a rutile structure into the wholly aromatic polyester. However, the resulting molded article has many small voids on the surface due to insufficient flow in a mold and this makes food removal more difficult when the molded article is used for long periods as ovenware, as in a molded article made only from a wholly aromatic polyester. This problem also exists when another fibrous reinforcing material or inorganic filler material is incorporated into a wholly aromatic polyester.

SUMMARY OF THE INVENTION

An object of the present invention is to provide ovenware with an excellent appearance and surface smoothness.

Another object of the present invention is to provide ovenware having resistance to staining by foods and also having unaltered food releasability when repeatedly used over a long period of time.

These objects of the present invention can be attained by coating at least the inner surface of ovenware made from a wholly aromatic polyester or from a composition composed of said wholly aromatic polyester and an inorganic filler material, with fluoroplastic coating material and a stepwise heat treatment between the molding and coating steps.

DETAILED DESCRIPTION OF THE INVENTION

The wholly aromatic polyester used in the present invention is a heat-meltable wholly aromatic polyester having a recurring unit represented by the general formula

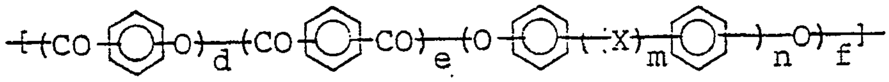

(wherein X is an alkyl group having 1 to 4 carbon atoms, -O-, $-SO_2-$, -S- or -CO-; m and n are each 0 or 1; the ratio of d:e is 1:1 to 10:1; the ratio of e:f is 9:10 to 10:9; and the two substituent groups of each aromatic ring are in the para or meta positions). The components of the wholly aromatic polyester can be for example, p-hydroxybenzoic acid, m-hydroxybenzoic acid, terephthalic acid, isophthalic acid, hydroquinone, resorcinol, 4,4'-dihydroxydiphenyl, 4,4'-dihydroxydiphenyl ether, 4,4'-dihydroxydiphenyl sulfone, 4,4'-dihydroxydiphenyl sulfide, 4,4'-dihydroxybenzophenone, 4,4'-dihydroxydiphenylmethane and their derivatives.

Of the possible combinations of these components, particular preferance is given to combinations of p-hydroxybenzoic acid or its ester, terephthalic acid or its ester and 4,4'-dihydroxydiphenyl or its ester. The wholly aromatic polyester used in the present invention can be produced in accordance with processes disclosed in Japanese Patent Application Kokai (Laid-open) Nos. 104932/1981, 44622/1982, etc., but other processes can also be used.

Cooking vessels produced by coating aluminum surfaces with a fluoroplastic coating material are known. However, no cooking vessel produced by coating the surface of a plastic food vessel with a fluoroplastic coating material is known. This is because the fluoroplastic coating is baked at a high temperature of 200° to 400°C and few plastics can withstand such a high temperature. Wholly aromatic polyesters have a very high heat resistance and accordingly, molded articles produced therefrom have a very small weight loss and cause no deformation at the baking temperature of a fluoroplastic coating material.

The fluoroplastic used in the fluoroplastic coating material of the present invention is a polytetrafluoroethylene, a tetrafluoroethylene-hexafluoropropylene copolymer, a polytrifluorochloroethylene, or a tetrafluoroethylene-perfluoroalkyl vinyl ether copolymer. Of these, polytetrafluoroethylene (hereinafter abbreviated to PTFE) is particularly preferred, because it has the best non-stick characteristics.

The fluoroplastic coating material used in the present invention is of a type generally used in applications requiring non-stick, releasability, slidability, etc. and is classified into the following two groups.

The first group is obtained by making a fluoroplastic as mentioned above into a coating material. This group is generally available either as a dispersion obtained by concentrating a fluoroplastic in polymer emulsion form together with a surfactant, or as an enamel obtained by adding to said dispersion an organic solvent, a small amount of a pigment, etc. Examples of commercially available dispersions include Polyfuron® Dispersions D-1 and D-2, Neofuron® Dispersons ND-2 and ND-4, Daifuron® Dispersión D-45S (these are products of DAIKIN INDUSTRIES, LTD.), Teflon® 30-J (a product of Mitsui Fluorochemical), etc. Examples of commercially available enamels include Polyfuron® Enamels E 4100CR, EK-4193CL, ES-5109BK (products of DAIKIN INDUSTRIES, LTD.), etc.

The second group is obtained by making a composition composed of a fluoroplastic as mentioned above and a heat-resistant, film-formable resin into a coating material. This group includes a dispersion obtained by dispersing a fluoroplastic in a solution of a film-formable resin and also a dispersion obtained by dispersing fine powders of a fluoroplastic and a film-formable resin in water or an organic solvent. Said heat-resistant, film-formable resin includes a polyamide imide, a polyimide, their precursors, a polysulfone, a polyphenylene sulfide, a polyether imide, and a silicone resin. Unlike the first group, this group requires no primer at the time of coating and is therefore generally called a one coat type.

Of the above-mentioned film-formable resins, a polyamide imide, a polyimide, their precursors and a polysulfone are particularly preferred. The reason is that these resins can form a highly adhesive and tough film on a wholly aromatic polyester as mentioned above or on a composition composed of the wholly aromatic polyester and an inorganic filler material. Examples of commercially available fluoroplastic coating materials of the second group include Polyfuron® Tough Coat Enamels TC-7109BK, TC-7808GY and TCW-8809BK (products of DAIKIN INDUSTRIES, LTD.), Peslon® One Coat (a product of Mie Yushi), Fluon® One Coat (a product of ICI), etc.

When the fluoroplastic coating material is coated onto ovenware made only from the wholly aromatic

polyester, the non-uniform flow marks of the original ovenware can be hidden. The resulting ovenware can have any desired color by incorporating an appropriate pigment into the fluoroplastic coating material. The new ovenware has excellent resistance to staining by foods and excellent food releasability, even when subjected to repeated use under very severe conditions. When the fluoroplastic coating material is coated onto ovenware made from a composition composed of the wholly aromatic polyester and an inorganic filler material, the resulting ovenware is superior in strength, rigidity, high temperature properties and mold shrinkage. The inorganic filler material can be glass fibers, glass beads, wollastonite, potassium titanate fibers, silica powder, talc, mica, clay, titanium dioxide, calcium carbonate, magnesium carbonate and aluminum hydroxide. The filling effect differs as a function of the shape and size of filler used. Of these fillers, wollastonite, silica powder and talc are particularly preferred with respect to the balance between moldability and physical properties (e.g. strength, rigidity and mold shrinkage).

The inorganic filler can be added to the wholly aromatic polyester in any amount unless the moldability of the latter is impaired. The amount added differs as a function of the type of filler, but is generally about 20 to 70% by weight.

The aromatic polyester or its composition can also contain one or more ordinary additives such as antioxidant, a heat stabilizer, an ultraviolet absorber, a coloring agent (e.g. a dye or a pigment), a flame-retardant, a flame retardancy assistant and an antistatic agent, in an amount not to impair the objects of the present invention.

In producing the ovenware of the present invention, a wholly aromatic polyester alone or a premix obtained by mixing the polyester, an inorganic filler and additives in a Henschel mixer is kneaded in a melt mixer and then converted into pellets. The pellets are subjected to injection molding to mold ovenware. Before this ovenware is coated with a fluoroplastic coating material at least on its inner surface, namely that which will later be in contact with foods, it preferably undergoes a heat treatment, surface roughening treatment and primer treatment.

The heat treatment is preferably carried out at the same temperature as the baking temperature of the fluoroplastic coating material to be subsequently coated. This heat treatment is not necessary when the baking temperature of the fluoroplastic coating material is 300 °C or lower. However, when the baking temperature is higher than 300 °C, since a small amount of the decomposition gas formed during molding and contained in the molded article may cause foaming during baking, it is preferable that the heat treatment is initially carried out at a temperature of 200 ° to 300 °C, which is then increased stepwise to the baking temperature. For instance, when the baking temperature of the fluoroplastic coating material to be subsequently coated is 360 °C, it is preferable that the initial heat treatment is performed at 250 °C for about 2 hours, the next heat treatment at one or two temperatures between 300 °C and 360 °C for 1 to 5 hours and the final heat treatment at 360 °C for 1 to 5 hours.

The surface roughening treatment is performed to increase the adhesiveness of the fluoroplastic coating material. This treatment is generally performed by sand blasting, but it is normally unnecessary. However, for molded articles which are obtained by injection molding using a large amount of a release agent (e.g. silicon) and as a result exhibit a beading phenomenon at the time of coating a fluoroplastic coating material, sand blasting is preferably carried out to remove their surface layers.

When a dispersion or enamel of a fluoroplastic is used as the fluoroplastic coating material, preliminary coating of a fluorine primer is necessary in order to increase the adhesiveness of the dispersion or enamel. However, when the fluoroplastic coating material is used in the form of a coating comprising a fluoroplastic and a heat-resistant, film-formable resin, no primer is necessary because the film-formable resin serves as the primer. After the pretreatments such as heat treatment, surface roughening treatment and primer treatment have been carried out as described above, a fluoroplastic coating material is applied using a spray gun or the like. The dispersing medium in the coating is removed. Baking is then carried out at a temperature which is the same or higher than the melting point of the fluoroplastic or at a temperature which is the same or higher than the melting or curing/film-forming temperature of the film-formable resin. This is the standard process employed in producing the ovenware of the present invention, but naturally other processes can also be used.

The ovenware of the present invention need not be coated with the fluoroplastic coating material on the outer surface, namely the surface with which foods do not come into direct contact. However, coating of the outer surface with the fluoroplastic coating material is preferable in order to give an attractive appearance and make it easier to remove sticking substances due to foods boiling over. Since the outer surface does not require food releasability to the same extent as the inner surface, it is recommended that the outer surface be coated to give an attractive appearance and increase the commercial value. It can be achieved by coating the outer surface with a composition consisting of a film-formable resin as a base and a small amount (about 2 to 25% by weight) of a fluoroplastic.

As explained above, when the surface of ovenware made from a wholly aromatic polyester or from a composition composed of said wholly aromatic polyester and an inorganic filler is coated with a fluoroplastic coating material, the resulting ovenware has an improved appearance and, due to to the inherent non-tackiness of the fluoroplastic, is not stained by by foods, even when used repeatedly under very severe conditions and has excellent food release characteristics.

The present invention will specifically be explained hereinafter by way of Examples.

Example 1

A wholly aromatic polyester having a recurring unit represented by the formula

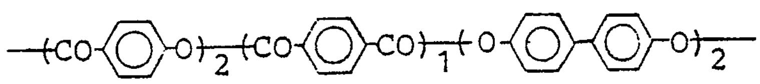

or a mixture consisting of the above wholly aromatic polyester and at least one filler material selected from glass fibers (REV 8, manufactured by Nihon Glass Seni), wollastonite (NYAD G, sold from Nagase Sangyo), silica powder (crystalite CMC 12S, manufactured by Tatsumori), talc (Talc S, manufactured by Tatsumori) and titanium dioxide (KR 310, manufactured by Titan Kogyo) and having a composition as shown in Table 1 was extruded from a twin screw extruder manufactured by Ikegai Corp. at a temperature of 360° C and then pelletized to obtain pellets of the wholly aromatic polyester or the mixture. Using a 28 g ( 1 ounce) injection molding machine (Neomat 47/28, manufactured by SUMITOMO HEAVY INDUSTRIES, LTD.), the pellets were molded into testpieces [12.7 mm (width) x 127 mm (length) x 6.4 mm (thickness)] for the measurement of flexural characteristics and the heat distortion temperature and also into plates [64 mm x 64 mm x 3 mm (thickness)] for the ovenware test, under a cylinder temperature of 380° C, an injection pressure of 1,500 $kg/cm^2$, a high injection speed and a mold temperature of 120° C. The flexural characteristics (ASTM D-790) and heat distortion temperature (ASTM D-648) of the test pieces were measured. The measurement results and the appearances of the plates are given in Table 1. All the testpieces had a high strength and high heat resistance. Those testpieces containing inorganic fillers had a high rigidity. Regarding appearance, the plates other than that containing wollastonite/titanium dioxide (composition F in Table 1) and that containing talc/titanium dioxide (composition G in Table 1) suffered from the formation of non-uniform flow marks, which were striking in the plate containing no filler (composition A in Table 1).

Each plate prepared above underwent a heat treatment at 250° C, 300° C, 330° C and 360° C in this order, for 2 hours in each case. Onto each plate was then spray-coated a fluorine primer (Polyfuron® Enamel EK-1908 GY, manufactured by DAIKIN INDUSTRIES, LTD.), and the primer was dried at 100° C for 20 minutes. Onto it was further spray-coated a PTFE enamel (Polyfuron® Enamel EK-4193CL, manufactured by DAIKIN INDUSTRIES, LTD.), and the plate temperature was increased from room temperature to 360° C in about 1 hour and baking was carried out at 360° C for 30 minutes, each plate being given an approximately 25 µM thick film. All the plates obtained had a good appearance of chocolate color without foaming or warping.

Each of these plates was placed at the bottom of a Pyrex tray. On the plate was placed 5 g of absorbent cotton containing 50 g of an edible oil. This tray system was then placed on the turntable of an electric oven (Model NE-8300, manufactured by Matsushita Electric Industrial Co., Ltd.) capable of generating a microwave of 2,450 mega Hz and also electrically heating up to 250° C and was subjected to a 5 cycle heating test. (One cycle consisted of 10 minutes of microwave irradiation, 20 minutes heating at 250° C by a 600 W heater and cooling in this order.) After the test, the absorbent cotton on the plate carbonized to a black color, but could easily be removed from the plate in all cases. The plate surface, after removal of the carbonized absorbent cotton, was washed with water using a sponge impregnated with a liquid detergent and observed. In all cases there was no surface swelling or staining.

Table 1

| Composition No. | Type and amount of filler (wt%) | Flexural characteristics Strength ($kg/cm^2$) | Breaking strain (%) | Modulus of elasticity ($kg/cm^2$) | Heat distortion temperature 18.6 kg/cm2 (°C) | Appearance of plate (before coating of fluoroplastic costing material) |
|---|---|---|---|---|---|---|
| A | No filler | 810 | 3.2 | 52,000 | 293 | x |
| B | Glass fiber, 40 | 1,080 | 2.4 | 103,000 | > 300 | Δ |
| C | Wollastonite, 40 | 1,060 | 2.3 | 110,000 | > 300 | Δ |
| D | Silica powder, 40 | 860 | 2.6 | 75,000 | > 300 | Δ |
| E | Talc, 40 | 850 | 2.2 | 90,000 | > 300 | Δ |
| F | Wollastonite/titanium dioxide, 40/10 | 1,090 | 1.9 | 120,000 | > 300 | o |
| G | Talc/titanium dioxide, 40/10 | 800 | 1.8 | 96,000 | > 300 | o |

o: Almost no flow marks and attractive appearance.
Δ: Few flow marks and slightly poor appearance.
x: Many flow marks and poor appearance.

Example 2

Plates of 64 mm x 64 mm x 3 mm (thickness) made from compositions A to G of Table 1, respectively, were subjected to the same heat treatment as in Example 1. Onto each of the resulting plates was spray-coated a polyether sulfone/PTFE coating material (PTFE content: about 50% by weight) (Fluon® One Coat, manufactured by ICI). The coated plate was heated from room temperature to 360° C in about 1 hour and baking was carried out at 360° C for about 30 minutes and an approximately 20 µM thick film was formed on the plate. All the plates had a good appearance of dark chocolate color with neither foaming nor warping.

These plates were subjected to the same 5 cycle heating test by electric oven as in Example 1. In all

cases, the carbonized absorbent cotton could easily be removed and there was neither swelling nor staining on the plate surface.

Example 3

A polyphenylene sulfide (Ryton® PPS V-1, manufactured by Philips) was ground using a jet mill (I-5 Type, manufactured by Nihon Pneumatic) to obtain a powder having an average particle diameter of about 5 µM. 42 Parts of this fine polyphenylene sulfide powder, 2 parts of carbon and 60 parts of an aqueous solution containing 5% of sodium lauryl sulfate were kneaded for about 7 hours in a ball mill. To it was added 58 parts of a PTFE enamel (Polyfuron® Enamel E-4100 CR, manufactured by DAIKIN INDUSTRIES, LTD.) and they were mixed to prepare a polyphenylene sulfide/PTFE coating material (PTFE content: about 40% by weight).

Plates of 64 mm x 64 mm x 3 mm (thickness) made from compositions C to E of Example 1, respectively, were subjected to a heat treatment consisting of 250° C x 2 hours and subsequently 300° C x 1 hour. Onto each of the resulting plates was spray-coated the above-prepared coating material. The coated plate was heated from room temperature to 300° C in about 40 minutes and baking was carried out at 300° C for 30 minutes and an approximately 20 µM thick film was formed on the plate. All the plates had a good black appearance with neither foaming nor warping.

These plates were subjected to the same 5 cycle heating test by electric oven as in Example 1. In all cases, the carbonized absorbent cotton could easily be removed and there was neither swelling nor staining on the plate surface.

Example 4

25 Parts of a polyimide (Kelimide 601 manufactured by Mitsui Petrochemical Industries, Ltd.) was dissolved in 60 parts of N-methylpyrrolidone and to it were slowly added 20 parts of a fine PTFE powder (Fluon® LI69J manufactured by Asahi Glass Co., Ltd.) accompanied by stirring with a dissolving means and thorough mixing. This was followed by the addition 10 parts each of xylene and methyl ethyl ketone to prepare a polyimide/PTFE coating material (PTFE content: about 44% by weight).

Plates of 64 mm x 64 mm x 3 mm (thickness) made from compositions C to E of Example 1, respectively, were spray-coated with the above-prepared coating material. Each of the coated plates were heated from room temperature to 260° C in about 1 hour and baking was carried out at 260° C for 30 minutes and an approximately 20 µM thick film was formed on the plate. All the plates had a good appearance with yellowish brown color with neither foaming nor warping.

These plates were subjected to the same 5 cycle heating test by electric oven as in Example 1. In all cases, the carbonized absorbent cotton could easily be removed and there was neither swelling nor staining on the plate surface.

Example 5

100 Parts of a polyamide imide solution (a xylene solution of HI-400 manufactured by Hitachi Chemical Co., Ltd.) and 80 parts of a tetrafluoroethylene-hexafluoropropylene copolymer dispersion (Neofuron® Dispersion ND-2 manufactured by DAIKIN INDUSTRIES, LTD.) were thoroughly mixed to prepare a polyamide imide/tetrafluoroethylene-hexafluoropropylene copolymer coating material (fluoro-plastic content: about 40%).

Plates of 64 mm x 64 mm x 3 mm (thickness) made from compositions C to E of Example 1, respectively, were subjected to a heat treatment of 250° C for 2 hours, at 300° C for 1 hour and 330° C for 1 hour in this order. Onto each of the resulting plates was spray-coated the above-prepared coating material. The coated plate was heated from room temperature to 330° C in about 1 hour and baking was carried out at 330° C for 30 minutes and an approximately 15 µM thick film was formed on the plate. All the plates had a good appearance with neither foaming nor warping.

These plates were subjected to the same 5 cycle heating test by electric oven as in Example 1. In all cases, the carbonized absorbent cotton could easily be removed and there was neither swelling nor staining on the plate surface.

Example 6

The same test as in Example 4 was performed, except that the fine PTFE powder used in Example 4

was replaced by the same tetrafluoroethylene-hexafluoropropylene copolymer dispersion as used in Example 5. Substantially the same results as in Example 4 were obtained.

Comparative Example 1

Plates of 64 mm x 64 mm x 3 mm (thickness) made from compositions A to G of Example 1, respectively, were subjected, without coating, to the same 5 cycle heating test by electric oven as in Example 1. As a result, in the case of the plates made from compositions A to E, the carbonized absorbent cotton stuck to the plate and could not be removed.

However in the case of the plates made from compositions F and G, the carbonized absorbent cotton could be removed, but the staining caused by penetration of carbonized oil into the porous layer of the plate surface could not be removed completely even by washing with water using a sponge impregnated with a liquid detergent.

Example 7

6 Containers each of lower diameter 96 mm, upper diameter 175 mm, height 50 mm and thickness 2.5 mm were molded from composition C of Example 1, using a 283 g (10 ounce) injection molding machine (N140A manufactured by Nikko) at a cylinder temperature of 360 °C. They then underwent heat treatment at 250 °C for 3 hours, 300 °C for 2 hours, 330 °C for 2 hours and 360 °C for 2 hours in this order. Onto the inner and outer surfaces of each of the resulting containers were coated coating materials having a composition shown in Table 2 to form a film, in the same manner as in Examples 1 to 6.

300 g Of a chicken meat were placed in each of the above prepared containers. Then, each container was put on the turntable of the same electric oven as in Example 1 and subjected to a 7 cycle heating test. (1 cycle consisted of 7 minutes of microwave irradiation, 10 minutes of electric heating at 250 °C and cooling.) In each container, the chicken scorched and stuck to the inner surface of container but could easily be removed from it. An oil presumably derived from the chicken stuck to the inner surface of each container after removal of the chicken. The same oil also stuck to part of the outer surface. However, these oils could easily be removed by washing with water using a liquid detergent, except the oil stuck to the outer surface of container a (regarding a, reference is made to Table 2). The outer surface of container a required twice the amount of detergent for the outer surface compared with other containers, but the oil could be removed completely. After washing with water, there was neither smell nor staining on any of the containers.

The above procedure was also applied to compositions B, D and E of Example 1. The results were as above.

Table 2

| Container | Inner surface | Outer surface |
|---|---|---|
| a | PTFE only | - |
| b | PTFE only | PTFE only |
| c | PTFE/polyether sulfone = 50/50 | PTFE/polyether sulfone = 5/95 |
| d | Same as above | PTFE/polyether sulfone = 10/90 |
| e | Same as above | PTFE/polyether sulfone = 20/80 |
| f | PTFE/polyamideimide =40/60 | PTFE/polyamideimide = 15/85 |

Comparative Example 2

6 Different containers molded from compositions B to G of Example 1, respectively, were subjected, without coating to the same 7 cycle heating test as in Example 7. In the containers made from compositions B to E, the chicken stuck slightly to the inner surface and could not be taken out after about the 5th and later cycles. In the containers made from compositions F and G, the chicken could easily be taken out even after completion of the 7th cycle, but staining could not be removed completely by washing.

Example 8

400 g Of a curry stew was placed in each of the containers a to e of Example 7. The stew in each container was irradiated with microwaves for 10 minutes, frozen in the freezing compartment of a refrigerator thawed and warmed by 10 minutes microwave irradiation. This procedure was repeated 10 times. The stew was then taken out of each container and the container was washed with a liquid detergent for observation of the surface. In all the containers, there was no surface change and no residual smell.

Comparative Example 3

Containers molded from compositions F and G of Example 1, respectively, were subjected without coating to the same test as in Example 8. Even after thorough washing, their surfaces had a slightly yellowish color and there was a slight curry smell.

**Claims**

**1.** Plastic ovenware, made from a wholly aromatic polyester having a recurring unit represented by the general formula.

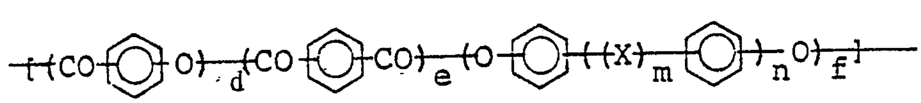

(wherein X is an alkyl group having 1 to 4 carbon atoms, -O-, $-SO_2-$, -S- or -CO-; m and n are each 0 or 1; the ratio of d:e is 1:1 to 10:1; the ratio of e:f is 9:10 to 10:9; and the two substituent groups of each aromatic ring are in the para or meta positions) or from a composition composed of said wholly aromatic polyester and an inorganic filler material, at least the inner surface of which is coated with a fluoroplastic coating material.

2. Plastic ovenware according to Claim 1, wherein the component of the wholly aromatic polyester is p-hydroxybenzoic acid, m-hydroxybenzoic acid, terephthalic acid, isophthalic acid, hydroquinone, resorcinol, 4,4'-dihydroxydiphenyl, 4,4'-dihydorxydiphenyl ether, 4,4'-dihydroxydiphenyl sulfone, 4,4'-dihydroxydiphenyl sulfide, 4,4'-dihydroxybenzophenone, 4,4'-dihydroxydiphenylmethane or their derivatives.

3. Plastic ovenware according to Claim 2, wherein the component of the wholly aromatic polyester is a combination of p-hydroxybenzoic acid or its ester, terephthalic acid or its ester and 4,4'-dihydroxydiphenyl or its ester.

4. Plastic ovenware according to Claim 1, wherein the fluoroplastic coating material is obtained by making a fluoroplastic into a coating material.

5. Plastic ovenware according to Claim 1, wherein the fluoroplastic coating material is obtained by making a composition composed of fluoroplastic and a heat-resistant, film-formable resin into a coating material.

6. Plastic ovenware according to Claim 4, wherein the fluoroplastic is a polytetrafluoroethylene, a tetrafluoroethylene-hexafluoropropylene copolymer, a polytrifluorochloroethylene, or a tetrafluoroethylene-perfluoroalkyl vinyl ether copolymer.

7. Plastic ovenware according to Claim 6, wherein the fluoroplastic is polytetrafluoroethylene.

8. Plastic ovenware according to Claim 5, wherein the fluoroplastic is a polytetrafluoroethylene, a tetrafluoroethylene-hexafluoropropylene copolymer, a polytrifluorochloroethylene, or a tetrafluoroethylene-perfluoroalkyl vinyl ether copolymer.

9. Plastic ovenware according to Claim 8, wherein the fluoroplastic is polytetrafluoroethylene.

10. Plastic ovenware according to Claim 5, wherein the heat-resistant, film-formable resin is a polyamide imide, a polyimide, their precursors, a polysulfone, a polyphenylene sulfide, a polyether imide, or a silicone resin.

11. Plastic ovenware according to Claim 1, wherein the inorganic filler material is glass fibers, glass beads, wollastonite, potassium titanate fibers, silica powder, talc, mica, clay, titanium dioxide, calcium carbonate, magnesium carbonate, or aluminum hydroxide.

12. Process for preparing a plastic ovenware according to claim 1 by molding a wholly aromatic polyester having a recurring unit represented by the general formula

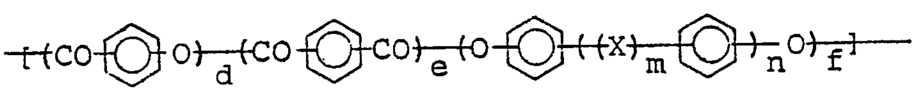

(wherein X is an alkyl group having 1 to 4 carbon atoms, -O-, $-SO_2-$, -S- or -CO-; m and n are each 0 or 1; the ratio of d:e is 1:1 to 10:1; the ratio of e:f is 9:10 to 10:9; and the two substituent groups of each aromatic ring are in para or meta positions) or a composition composed of said wholly aromatic polyester and an inorganic filler material, and coating at least the inner surface of the molded product obtained with a fluoroplastic type coating material, characterized in that the molded product as obtained prior to being coated with the fluoroplastic type coating material is subjected to an initial heat treatment at a temperature of 200° to 300° C, whereupon the heat treatment temperature is stepwise increased up to the baking temperature of the fluoroplastic type coating material.

## Revendications

1. Ustensile de cuisson en matière plastique, fait d'un polyester entièrement aromatique ayant un motif répétitif représenté par la formule générale

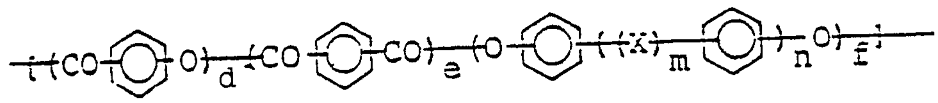

(dans laquelle X est un groupement alkyle à 1-4 atomes de carbone, -O-, $-SO_2-$, -S- ou -CO-; m et n sont mis chacun pour 0 ou 1; le rapport d:e est compris entre 1:1 et 10:1; le rapport e:f est compris entre 9:10 et 10:9; et les deux groupements substituants de chaque noyau aromatique sont en positions para ou méta), ou d'une composition composée dudit polyester entièrement aromatique et d'une matière de charge inorganique, cet ustensile étant garni, au moins sur sa surface intérieure, d'une matière de revêtement en plastique fluoré.

2. Ustensile de cuisson en matière plastique selon la revendication 1, dans lequel le composant du polyester entièrement aromatique est l'acide p-hydroxybenzoïque, l'acide m-hydroxybenzoïque, l'acide téréphtalique, l'acide isophtalique, l'hydroquinone, le résorcinol, le 4,4'-dihydroxydiphényle, l'éther 4,4'-dihydroxydiphénylique, la 4,4'-dihydroxydiphénylsulfone, le sulfure de 4,4'-dihydroxydiphényle, la 4,4'-dihydroxybenzophénone. le 4,4'-dihydroxydiphénylméthane ou leurs dérivés.

3. Ustensile de cuisson en matière plastique selon la revendication 2, dans lequel le composant du polyester entièrement aromatique est une combinaison d'acide p-hydroxybenzoïque ou d'un ester de celui-ci, d'acide téréphtalique ou d'un ester de celui-ci et de 4,4'-dihydroxydiphényle ou d'un ester de celui-ci.

4. Ustensile de cuisson en matière plastique selon la revendication 1, dans lequel la matière de revêtement en plastique fluoré est obtenue en convertissant un plastique fluoré en matière de revêtement.

5. Ustensile de cuisson en matière plastique selon la revendication 1, dans lequel la matière de revêtement en plastique fluoré est obtenue en convertissant en matière de revêtement une composition composée de plastique fluoré et d'une résine filmogène résistante à la chaleur.

6. Ustensile de cuisson en matière plastique selon la revendication 4, dans lequel le plastique fluoré est un polytétrafluoroéthylène, un copolymère tétrafluoroéthylène/hexafluoropropylène, un polytrifluorochloroéthylène ou un copolymère tétrafluoroéthylène/oxyde de vinyle et de perfluoroalkyle.

7. Ustensile de cuisson en matière plastique selon la revendication 6, dans lequel le plastique fluoré est un polytétrafluoroéthylène.

8. Ustensile de cuisson en matière plastique selon la revendication 5, dans lequel le plastique fluoré est un polytétrafluoroéthylène, un copolymère tétrafluoroéthylène/hexafluoropropylène, un polytrifluorochloroéthylène ou un copolymère tétrafluoroéthylène/oxyde de vinyle et de perfluoroalkyle.

9. Ustensile de cuisson en matière plastique selon la revendication 8, dans lequel le plastique fluoré est un polytétrafluoroéthylène.

10. Ustensile de cuisson en matière plastique selon la revendication 5, dans lequel la résine filmogène résistante à la chaleur est un polyamideimide, un polyimide, leurs précurseurs, une polysulfone, un poly(sulfure de phénylène), un polyétherimide ou une résine silicone.

11. Ustensile de cuisson en matière plastique selon la revendication 1, dans lequel la matière de charge inorganique est constituée par des fibres de verre, des perles de verre, de la wollastonite, des fibres de titanate de potassium, de la poudre de silice, du talc, du mica, de l'argile, du dioxyde de titane, du carbonate de calcium, du carbonate de magnésium ou de l'hydroxyde d'aluminium.

12. Procédé de fabrication d'un ustensile de cuisson en matière plastique selon la revendication 1 par moulage d'un polyester entièrement aromatique ayant un motif répétitif représenté par la formule générale

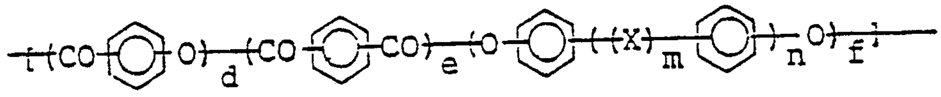

(dans laquelle X est un groupement alkyle à 1-4 atomes de carbone, -O-, $-SO_2-$, -S- ou -CO-; m et n sont mis chacun pour 0 ou 1; le rapport d:e est compris entre 1:1 et 10:1; le rapport e:f est compris entre 9:10 et 10:9; et les deux groupements substituants de chaque noyau aromatique sont en positions para ou méta), ou d'une composition composée dudit polyester entièrement aromatique et d'une matière de charge inorganique, et par garnissage du produit moulé obtenu, au moins sur sa surface intérieure, avec une matière de revêtement en plastique fluoré, caractérisé en ce que le produit moulé, tel qu'il est obtenu avant d'être garni de la matière de revêtement en plastique fluoré, est soumis à un traitement thermique initial à une température de 200° à 300° C, après quoi la température de traitement thermique est élevée par échelons jusqu'à la température de cuisson de la matière de revêtement en plastique fluoré.

## Patentansprüche

1. Plastikgeschirr, hergestellt aus einem vollständig aromatischen Polyester mit einer wiederkehrenden Einheit der allgemeinen Formel:

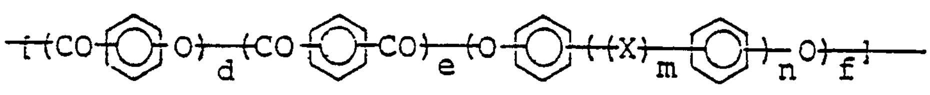

worin bedeuten:
X eine Alkylgruppe mit 1 bis 4 Kohlenstoffatom(en),
-O-, $-SO_2-$, -S- oder -CO-;
m und n jeweils 0 oder 1;
das Verhältnis d/e = 1/1 bis 10/1 und
das Verhältnis e/f = 9/10 bis 10/9,
und wobei die beiden Substituentengruppen jeden aromatischen Rings sich in den p- oder m-Stellungen befinden; oder aus einer Masse aus dem vollständig aromatischen Polyester und einem anorganischen Füllstoff, wobei zumindest seine Innenfläche mit einem Fluorkunststoffbeschichtungsmaterial überzogen ist.

2. Plastikgeschirr nach Anspruch 1, dadurch gekennzeichnet, daß die Komponente des vollständig aromatischen Polyesters aus p-Hydroxybenzoesäure, m-Hydroxybenzoesäure, Terephthalsäure, Isophthalsäure, Hydrochinon, Resorcin, 4,4'-Dihydroxydiphenyl, 4,4'-Dihydroxydiphenylether, 4,4'-Dihydroxydiphenylsulfon, 4,4'-Dihydroxydiphenylsulfid, 4,4'-Dihydroxybenzophenon, 4,4'-Dihydroxydiphenylmethan oder deren Derivaten besteht.

3. Plastikgeschirr nach Anspruch 2, dadurch gekennzeichnet, daß die Komponente des vollständig aromatischen Polyesters aus einer Kombination von p-Hydroxybenzoesäure oder ihres Esters, Terephthalsäure oder ihres Esters und 4,4'-Dihydroxydiphenyl oder seines Esters besteht.

4. Plastikgeschirr nach Anspruch 1, dadurch gekennzeichnet, das das Fluorkunststoffbeschichtungsmaterial durch Überführen eines Fluorkunststoffs in ein Beschichtungsmaterial erhalten wurde.

5. Plastikgeschirr nach Anspruch 1, dadurch gekennzeichnet, daß das Fluorkunststoffbeschichtungsmaterial durch Überführen einer Masse aus einem Fluorkunststoff und einem hitzebeständigen, filmbildenden Harz in ein Beschichtungsmaterial erhalten wurde.

6. Plastikgeschirr nach Anspruch 4, dadurch gekennzeichnet, daß der Fluorkunststoff aus einem Polytetrafluorethylen, einem Tetrafluorethylen-Hexafluorpropylen-Mischpolymerisat, einem Polytrifluorchlorethylen oder einem Tetrafluorethylen-Perfluoralkylvinylether-Mischpolymerisat besteht.

7. Plastikgeschirr nach Anspruch 6, dadurch gekennzeichnet, daß der Fluorkunststoff aus Polytetrafluorethylen besteht.

8. Plastikgeschirr nach Anspruch 5, dadurch gekennzeichnet, daß der Fluorkunststoff aus einem Polytetrafluorethylen, einem Tetrafluorethylen-Hexafluorpropylen-Mischpolymerisat, einem Polytrifluorchlorethylen oder einem Tetrafluorethylen-Perfluoralkylvinylether-Mischpolymerisat besteht.

9. Plastikgeschirr nach Anspruch 8, dadurch gekennzeichnet, daß der Fluorkunststoff aus Polytetrafluorethylen besteht.

10. Plastikgeschirr nach Anspruch 5, dadurch gekennzeichnet, daß das hitzebeständige, filmbildende Harz aus einem Polyamidimid, einem Polyimid, deren Vorläufern, einem Polysulfon, einem Polyphenylensulfid, einem Polyetherimid oder einem Silikonharz besteht.

11. Plastikgeschirr nach Anspruch 1, dadurch gekennzeichnet, daß der anorganische Füllstoff aus Glasfasern, Glasperlen, Wollastonit, Kaliumtitanatfasern, Siliziumdioxidpulver, Talkum, Glimmer, Ton, Titandioxid, Calciumcarbonat, Magnesiumcarbonat oder Aluminiumhydroxid besteht.

12. Verfahren zur Herstellung eines Plastikgeschirrs nach Anspruch 1 durch Ausformen eines vollständig aromatischen Polyesters mit einer wiederkehrenden Einheit der allgemeinen Formel

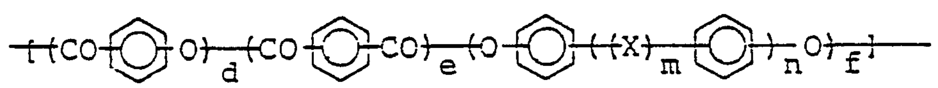

worin bedeuten:
X eine Alkylgruppe mit 1 bis 4 Kohlenstoffatom(en),
-O-, $-SO_2-$, -S- oder -CO-;
m und n jeweils 0 oder 1;
das Verhältnis d/e = 1/1 bis 10/1 und
das Verhältnis e/f = 9/10 bis 10/9,
und wobei die beiden substituentengruppen jeden aromatischen Rings sich in den p- oder m-Stellungen befinden; oder einer Masse aus dem vollständig aromatischen Polyester und einem anorganischen Füllstoff und Beschchten zumindest der Innenfläche des erhaltenen Formlings mit einem fluorkunststoffartigen Beschichtungsmaterial,
**dadurch gekennzeichnet,** daß der erhaltene Formling vor dem Beschichten mit dem fluorkunststoffartigen Beschichtungsmaterial zunächst einer Wärmebehandlung bei 200 - 300 °C unterworfen wird, worauf die Wärmebehandlungstemperatur schrittweise bis zur Brenntemperatur des fluorkunststoffartigen Beschichtungsmaterials erhöht wird.